# FASCICULE DE BREVET EUROPEEN

(11) **EP 2 308 726 B1**
(45) Date de publication et mention de la délivrance du brevet: **23.04.2014**
(21) Numéro de dépôt: 10186636.6
(22) Date de dépôt: 06.10.2010
(51) Int. Cl.: B60S 1/48, B60S 1/52

(54) **Dispositif d'acheminement de liquide de nettoyage**
Vorrichtung zum Einleiten von Reinigungsflüssigkeit
Device for transporting cleaning liquid

(30) Priorité: 07.10.2009 FR 0904797
(43) Date de publication de la demande: 13.04.2011
(73) Titulaire: Valeo Systèmes d'Essuyage, 78321 Le Mesnil Saint Denis (FR)
(72) Inventeur: Thebault, Denis, 92170, VANVES (FR); Dias, Dominique, 78470, St. Remy les chevreuse (FR)
(74) Mandataire: Léveillé, Christophe

(56) Documents cités:
- DE-A1- 4 239 536
- DE-A1- 19 653 432
- GB-A- 658 635
- GB-A- 1 493 597
- GB-A- 2 047 079
- US-A1- 2004 117 937
- US-A1- 2005 060 830
- US-A1- 2005 274 398
- US-A1- 2006 220 598
- US-A1- 2008 216 274

## Description

La présente invention a pour objet un dispositif d'acheminement de liquide de nettoyage vers une surface vitrée d'un véhicule automobile, et notamment un dispositif d'acheminement de liquide lave-glace. Elle a également pour objet l'utilisation du dispositif pour l'alimentation en liquide d'au moins deux gicleurs pour véhicule automobile.

On s'intéresse dans la suite principalement mais non exclusivement à l'acheminement d'un liquide pour le nettoyage d'une surface vitrée d'un véhicule automobile, telle que le pare-brise, la lunette arrière ou les parties extérieures des projecteurs ou phares.

Les dispositifs d'acheminement de liquide lave-glace comprennent traditionnellement un circuit d'alimentation comportant un répartiteur de fluide apte à acheminer le liquide depuis une entrée de fluide vers une sortie destinée à une zone d'essuyage située du côté passager et vers une sortie destinée à une zone d'essuyage située du côté conducteur.

Dans de tels dispositifs, le liquide de nettoyage est envoyé simultanément sur les deux zones d'essuyage, la quantité de liquide de nettoyage envoyée sur les deux zones d'essuyage étant sensiblement la même.

Le document US 2008/216274 A1 décrit un dispositif selon le préambule de la revendication 1.

Or, il est fréquent que le balai d'essuie-glace possède une longueur différente suivant qu'il est situé côté du conducteur ou du côté passager. Il en résulte que la quantité projetée par longueur de balai n'est pas identique pour les deux zones d'essuyage, ce qui peut entraîner un surplus de liquide sur un des côtés et conduire à des problèmes de perte de visibilité.

L'invention vise à remédier à ces inconvénients.

L'invention a ainsi pour objet un dispositif d'acheminement de liquide de nettoyage vers une surface vitrée d'un véhicule automobile comprenant une première zone d'essuyage essuyée par un premier balai d'essuyage et une deuxième zone d'essuyage essuyée par un deuxième balai d'essuyage, le deuxième balai d'essuyage étant plus long que le premier balai d'essuyage, le dispositif comprenant au moins un répartiteur de liquide apte à acheminer le liquide depuis une entrée de liquide vers une première sortie de liquide reliée à la première zone d'essuyage via un premier conduit et vers une deuxième sortie de liquide reliée à la deuxième zone d'essuyage via un deuxième conduit.

Conformément à l'invention, le dispositif comprend des moyens de limitation de débit aptes à rendre le débit de liquide acheminé vers la première zone d'essuyage inférieur au débit de liquide acheminé vers la deuxième zone d'essuyage.

Ainsi, grâce aux moyens de limitation de débit, il est possible de contrôler la quantité de liquide de nettoyage associé à chaque balai et d'équilibrer la répartition du liquide sur les deux zones d'essuyage, en fonction de la longueur des balais.

Les moyens de limitation de débit selon l'invention sont aptes à limiter le débit de liquide acheminé vers la première zone d'essuyage en fonction de la longueur des deux balais d'essuyage.

Les moyens de limitation de débit sont de préférence aptes à limiter le débit de liquide acheminé vers la première zone d'essuyage de manière à ce que le rapport débit de liquide acheminé vers la première zone d'essuyage/longueur du premier balai soit sensiblement égal, voire égal, au rapport débit de liquide acheminé vers la deuxième zone d'essuyage/longueur du deuxième balai.

Selon l'invention les moyens de limitation de débit comprennent un réducteur de section associé au premier conduit.

Dans un mode de réalisation, le dispositif peut comprendre des moyens de contrôle reliés au réducteur de section.

Dans un autre mode de réalisation, qui ne fait pas partie de la présente invention, les moyens de limitation de débit consistent en un premier conduit de longueur supérieure à la longueur du deuxième conduit.

La première zone d'essuyage peut être une zone située du côté passager et la deuxième zone d'essuyage peut être une zone située du côté conducteur.

L'invention a également pour objet l'utilisation d'un dispositif décrit ci-dessus pour l'alimentation en liquide d'un système d'essuyage comprenant au moins un gicleur associé à la première zone d'essuyage et au moins un gicleur associé à la deuxième zone d'essuyage.

On entend par gicleur un orifice d'arrosage sous pression disposé aussi bien au niveau du capot du véhicule automobile qu'au niveau d'une rampe d'arrosage directement intégrée sur un balai d'essuie-glace.

Le système d'essuyage peut comprendre deux balais, chaque balai étant équipé d'un premier gicleur pour permettre une distribution de liquide d'un premier côté du balai pendant une phase montante du balayage et d'un deuxième gicleur pour permettre une distribution de liquide de l'autre côté du balai pendant une phase descendante du balayage, le dispositif comprenant un premier et un deuxième répartiteur de liquide, les sorties de liquide du premier répartiteur de liquide étant destinées à alimenter en liquide les premiers gicleurs des balais, les sorties de liquide du deuxième répartiteur de liquide étant destinées à alimenter en liquide les deuxièmes gicleurs des balais.

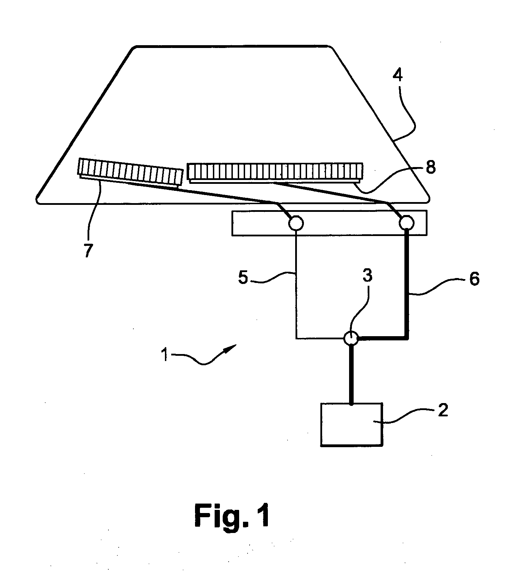

D'autres caractéristiques et avantages de la présente invention apparaîtront plus clairement à la lecture de la description suivante, donnée à titre d'exemple illustratif et non limitatif, et faite en référence à la figure 1 qui illustre schématiquement un dispositif d'acheminement de liquide de nettoyage selon l'invention.

Le dispositif 1 d'acheminement de liquide de nettoyage, tel qu'illustré à la figure 1, comprend une pompe 2 alimentant en liquide de nettoyage une entrée de liquide d'un répartiteur 3 de liquide. Le répartiteur 3 comprend deux sorties de liquide. Une première sortie de liquide du répartiteur 3 est reliée à une première zone d'essuyage d'une surface vitrée 4, telle qu'un pare-brise, via un premier conduit 5. La deuxième sortie de liquide du répartiteur 3 est reliée à une deuxième zone d'essuyage de la surface vitrée 4 via un deuxième conduit 6. La première zone d'essuyage est une zone du pare-brise 4 située du côté passager, tandis que la deuxième zone d'essuyage est une zone du pare-brise 4 située du côté conducteur.

L'essuyage de la zone d'essuyage située du côté passager est réalisé à l'aide d'un balai 7, tandis que l'essuyage de la zone d'essuyage située du côté conducteur est réalisé à l'aide d'un balai 8. Le balai 8 situé du côté conducteur est plus long que le balai 7 situé du côté passager.

Chaque balai 7, 8 peut être équipé d'un premier gicleur pour permettre une distribution de liquide d'un premier côté du balai 7, 8 pendant une phase montante du balayage et d'un deuxième gicleur pour permettre une distribution de liquide de l'autre côté du balai 7, 8 pendant une phase descendante du balayage. Pour parvenir à cette alimentation des deux gicleurs, le dispositif 1 comprend avantageusement un premier et un deuxième répartiteur de liquide, les sorties de liquide du premier répartiteur de liquide étant destinées à alimenter en liquide les premiers gicleurs des balais 7, 8, tandis que les sorties de liquide du deuxième répartiteur de liquide sont destinées à alimenter en liquide les deuxièmes gicleurs des balais 7, 8. Chaque répartiteur de liquide pourra être alimenté en liquide de nettoyage par une pompe distincte.

Conformément à l'invention, le dispositif 1 comprend en outre des moyens de limitation de débit aptes à limiter le débit de liquide acheminé coté conducteur. On introduit ainsi dans le conduit 5 qui part vers le balai 7 le moins long un système de limitation du débit, de façon à venir contrôler exactement la quantité d'eau projetée par le balai 7 et ainsi équilibrer la répartition du liquide sur les deux cotés, en fonction de la longueur du balai 7.

L'invention permet donc d'adapter le débit du ou des gicleurs situés du côté du balai 7 à la longueur du balai 7, pour un système d'essuyage avant ou arrière.

Les moyens de limitation de débit peuvent comprendre un limiteur de débit qui peut être disposé en tout point entre la sortie du répartiteur 3 et le balai 7, et qui peut être réalisé par divers moyens.

On peut ainsi concevoir un réducteur de section fixe intégré dans le milieu du conduit 5.

On peut également concevoir un réducteur de section variable intégré dans le milieu du conduit 5, et qui peut être commandé par des moyens de contrôle. Les moyens de contrôle peuvent être un module électronique, intégré au calculateur du véhicule, ou bien séparé du calculateur et monté dans un module spécifique.

Dans un autre mode de réalisation, les moyens de limitation de débit peuvent consister en un prolongateur connecté sur le répartiteur 3 et qui intègre un réducteur de débit, ou en un réducteur à insérer à l'entrée du balai 7 avant le montage du gicleur.

Dans un autre mode de réalisation, tel qu'illustré à la figure 1, le conduit 5 présente un diamètre interne très inférieur au diamètre intérieur du conduit 6.

Dans une variante, on peut également utiliser un conduit 5 de très grande longueur par rapport au conduit 6, de façon à augmenter la perte de charge et donc diminuer le débit de liquide acheminé du coté conducteur.

## Revendications

1. Dispositif (1) d'acheminement de liquide de nettoyage vers une surface vitrée d'un véhicule automobile comprenant une première zone d'essuyage essuyée par un premier balai d'essuyage (7) et une deuxième zone d'essuyage essuyée par un deuxième balai d'essuyage (8), le deuxième balai d'essuyage (8) étant plus long que le premier balai d'essuyage (7), le dispositif (1) comprenant au moins un répartiteur de liquide (3) apte à acheminer le liquide depuis une entrée de liquide vers une première sortie de liquide reliée à la première zone d'essuyage via un premier conduit (5) et vers une deuxième sortie de liquide reliée à la deuxième zone d'essuyage via un deuxième conduit (6), le dispositif (1) comprend des moyens de limitation de débit aptes à rendre le débit de liquide acheminé vers la première zone d'essuyage inferieur au débit de liquide acheminé vers la deuxième zone d'essuyage, **caractérisé en ce que** les moyens de limitation de débit comprennent un réducteur de section associé au premier conduit (5) **et ces moyens de limitation sont aptes à limiter le débit de liquide acheminé vers la première zone d'essuyage en fonction de la longueur des deux balais d'essuyage (7,8).**

2. Dispositif (1) selon la revendication 1, **caractérisé en ce que** les moyens de limitation de débit sont aptes à limiter le débit de liquide acheminé vers la première zone d'essuyage de manière à ce que le rapport débit de liquide acheminé vers la première zone d'essuyage/longueur du premier balai (7) soit sensiblement égal au rapport débit de liquide acheminé vers la deuxième zone d'essuyage/longueur du deuxième balai (8).

3. Dispositif (1) selon la revendication 1, **caractérisé en ce qu'**il comprend des moyens de contrôle reliés au réducteur de section.

4. Dispositif (1) selon l'une des revendications 1 à 3, **caractérisé en ce que** la première zone d'essuyage est une zone située du côté passager et **en ce que** la deuxième zone d'essuyage est une zone située du côté conducteur.

5. Utilisation d'un dispositif (1) selon l'une des revendications 1 à 4 pour l'alimentation en liquide d'un système d'essuyage comprenant au moins un gicleur associé à la première zone d'essuyage et au moins un gicleur associé à la deuxième zone d'essuyage.

6. Utilisation selon la revendication 5, **caractérisée en ce que** le système d'essuyage comprend deux balais (7,8), chaque balai (7,8) étant équipé d'un premier gicleur pour permettre une distribution de liquide d'un premier côté du balai (7,8) pendant une phase montante du balayage et d'un deuxième gicleur pour permettre une distribution de liquide de l'autre côté du balai (7,8) pendant une phase descendante du balayage, le dispositif (1) comprenant un premier et un deuxième répartiteur de liquide, les sorties de liquide du premier répartiteur de liquide étant destinées à alimenter en liquide les premiers gicleurs des balais (7,8), les sorties de liquide du deuxième répartiteur de liquide étant destinées à alimenter en liquide les deuxièmes gicleurs des balais (7,8).

## Patentansprüche

1. Vorrichtung (1) zum Leiten von Reinigungsflüssigkeit zu einer Glasfläche eines Kraftfahrzeugs, umfassend einen ersten Wischbereich, der von einem ersten Wischblatt (7) gewischt wird, und einen zweiten Wischbereich, der von einem zweiten Wischblatt (8) gewischt wird, das länger als das erste Wischblatt (7) ist, wobei die Vorrichtung (1) mindestens einen Flüssigkeitsverteiler (3) umfasst, der geeignet ist, die Flüssigkeit von einem Flüssigkeitseingang zu einem ersten Flüssigkeitsausgang zu leiten, der über eine erste Leitung (5) mit dem ersten Wischbereich verbunden ist, und zu einem zweiten Flüssigkeitsausgang, der über eine zweite Leitung (6) mit dem zweiten Wischbereich verbunden ist, wobei die Vorrichtung (1) Durchsatzbegrenzungsmittel umfasst, die geeignet sind, den Durchsatz von zum ersten Wischbereich geleiteter Flüssigkeit gegenüber dem Durchsatz von zum zweiten Wischbereich geleiteter Flüssigkeit zu verringern, **dadurch gekennzeichnet, dass** die Durchsatzbegrenzungsmittel einen der ersten Leitung (5) zugeordneten Querschnittsminderer umfassen und diese Begrenzungsmittel geeignet sind, den Durchsatz von zum ersten Wischbereich geleiteter Flüssigkeit in Abhängigkeit von der Länge der beiden Wischblätter (7, 8) zu begrenzen.

2. Vorrichtung (1) nach Anspruch 1, **dadurch gekennzeichnet, dass** die Durchsatzbegrenzungsmittel geeignet sind, den Durchsatz von zum ersten Wischbereich geleiteter Flüssigkeit so zu begrenzen, dass das Verhältnis von Durchsatz von zum ersten Wischbereich geleiteter Flüssigkeit zu Länge des ersten Blatts (7) im Wesentlichen gleich dem Verhältnis von Durchsatz von zum zweiten Wischbereich geleiteter Flüssigkeit zu Länge des zweiten Blatts (8) ist.

3. Vorrichtung (1) nach Anspruch 1, **dadurch gekennzeichnet, dass** sie Steuermittel umfasst, die mit dem Querschnittsminderer verbunden sind.

4. Vorrichtung (1) nach einem der Ansprüche 1 bis 3, **dadurch gekennzeichnet, dass** der erste Wischbereich ein auf der Beifahrerseite angeordneter Bereich ist und dass der zweite Wischbereich ein auf der Fahrerseite angeordneter Bereich ist.

5. Verwendung einer Vorrichtung (1) nach einem der Ansprüche 1 bis 4 zur Versorgung einer Wischanlage mit Flüssigkeit, die mindestens eine dem ersten Wischbereich zugeordnete Düse und mindestens eine dem zweiten Wischbereich zugeordnete Düse umfasst.

6. Verwendung nach Anspruch 5, **dadurch gekennzeichnet, dass** die Wischanlage zwei Blätter (7, 8) umfasst, die jeweils mit einer ersten Düse ausgerüstet sind, um eine Verteilung von Flüssigkeit von einer ersten Seite des Blatts (7, 8) während einer ansteigenden Phase des Wischens zu gestatten, sowie mit einer zweiten Düse, um eine Verteilung von Flüssigkeit von der anderen Seite des Blatts (7, 8) während einer niedergehenden Phase des Wischens zu gestatten, wobei die Vorrichtung (1) einen ersten und einen zweiten Flüssigkeitsverteiler umfasst, wobei die Flüssigkeitsausgänge des ersten Flüssigkeitsverteilers dazu bestimmt sind, die ersten Düsen der Blätter (7, 8) mit Flüssigkeit zu versorgen, und die Flüssigkeitsausgänge des zweiten Flüssigkeitsverteilers dazu bestimmt sind, die zweiten Düsen der Blätter (7, 8) mit Flüssigkeit zu versorgen.

## Claims

1. Device (1) for conveying cleaning liquid towards a glass surface of a motor vehicle, comprising a first wiping zone wiped by a first wiper blade (7) and a second wiping zone wiped by a second wiper blade (8), the second wiper blade (8) being longer than the first wiper blade (7), the device (1) comprising at least one liquid distributor (3) designed to convey the liquid from a liquid inlet towards a first liquid outlet connected to the first wiping zone via a first duct (5) and towards a second liquid outlet connected to the second wiping zone via a second duct (6), the device (1) comprising flow-limiting means designed to make the flow of liquid conveyed towards the first wiping zone less than the flow of liquid conveyed towards the second wiping zone, **characterized in that** the flow-limiting means comprise a cross-section reducer associated with the first duct (5) and these limiting means are designed to limit the flow of liquid conveyed towards the first wiping zone as a function of the length of the two wiper blades (7, 8).

2. Device (1) according to Claim 1, **characterized in that** the flow-limiting means are designed to limit the flow of liquid conveyed towards the first wiping zone in such a way that the ratio of flow of liquid conveyed towards the first wiping zone to length of the first blade (7) is substantially equal to the ratio of flow of liquid conveyed towards the second wiping zone to length of the second blade (8).

3. Device (1) according to Claim 1, **characterized in that** it comprises control means connected to the cross-section reducer.

4. Device (1) according to one of Claims 1 to 3, **characterized in that** the first wiping zone is a zone situated on the passenger side and **in that** the second wiping zone is a zone situated on the driver side.

5. Use of a device (1) according to one of Claims 1 to 4 for supplying liquid to a wiper system comprising at least one nozzle associated with the first wiping zone and at least one nozzle associated with the second wiping zone.

6. Use according to Claim 5, **characterized in that** the wiper system comprises two blades (7, 8), each blade (7, 8) being equipped with a first nozzle for allowing liquid distribution on a first side of the blade (7, 8) during an upward sweeping phase and with a second nozzle for allowing distribution of liquid on the other side of the blade (7, 8) during a downward sweeping phase, the device (1) comprising a first and a second liquid distributor, the liquid outlets of the first liquid distributor being intended to supply liquid to the first nozzles of the blades (10, 8), the liquid outlets of the second liquid distributor being intended to supply liquid to the second nozzles of the blades (7, 8) .
